# EUROPEAN PATENT SPECIFICATION

(11) **EP 0 634 090 B1**
(45) Date of publication and mention of the grant of the patent: **02.06.1999**
(21) Application number: 94304912.2
(22) Date of filing: 04.07.1994
(51) Int. Cl.: A01D 34/68

(54) **Improvements in and relating to rotary mowers**
Verbesserungen an und im Zusammenhang mit Kreiselmähern
Améliorations sur et en relation avec des rotofaucheuses

(30) Priority: 15.07.1993 GB 9314687
(43) Date of publication of application: 18.01.1995
(73) Proprietor: ELECTROLUX OUTDOOR PRODUCTS LIMITED, Newton Aycliffe, Co Durham DL5 6UP (GB)
(72) Inventor: Bowden, Michael, Newton Aycliffe, Co. Durham DL5 4RS (GB)
(74) Representative: Pratt, David Martin

(56) References cited:
- EP-A- 0 045 177
- US-A- 5 222 349

## Description

This invention relates to a rotary hover mower, and in particular to such a mower that is required to collect grass cuttings to leave a neat and tidy finish to a mown area.

The type of hover mower which can presently collect grass has some disadvantages which restrict overall performance of the product. In particular, known collecting hover mowers, by virtue of their collection system, can only collect grass properly when the product is used in a straight forward direction. This is a major disadvantage, since a hover mower offers the unique facility to be used in all directions. A further disadvantage with known grass collecting hover mowers is that, in order to alter the height of cut of the mower, its blade needs to be removed, and blade spacing washers added or taken away from between the blade and an abutment to alter the position of the blade relative to the ground. Another limitation is that, since the machine collects grass in a collection device, which is usually attached to the rear of the machine, it becomes unbalanced, which can cause the front of the machine to lift slightly, allowing air and grass cuttings to be exhausted from within a cutting chamber, causing a nuisance to the user, and a reduction in performance. A known type of mower is described in EP-A-0045177.

An aim of the invention is to reduce some or all of these product deficiencies, and to offer advantages over products utilising existing technology.

The present invention provides a rotary hover mower comprising a main body, a power source supported on the main body, an impeller for creating pressure air, and a cutting member, the impeller and the cutting member each being drivingly connected to the power source, characterised in that at least two hoods are directly or indirectly carried by the main body, each hood opening downwardly towards ground datum, and in that passageway means are provided for transmitting pressure air from the impeller to each hood, whereby pressure air issuing from each hood serves to support the mower above ground datum.

Conveniently, the mower further comprising a secondary body disposed within the main body, the passageway means being formed between the main body and the secondary body. Preferably, the secondary body includes an annular peripheral wall defining a cutting chamber in which the cutting member is rotatably mounted. The impeller and the cutting member are preferably coaxially mounted, and the impeller extends substantially across the annular peripheral wall for preferentially directing pressure air directly into the passageway means.

Two forms of mower, each of which is constructed in accordance with the invention, will now be described, by way of example, with reference to the drawings, in which:
Figure 1 is a longitudinal section taken through the fore-aft centre line of the first form of mower;
Figure 2 is a section, similar to that Figure 1, of the second form of mower; and
Figure 3 is a plan of the mower of Figure 1 with the grass collector unit and power unit removed.

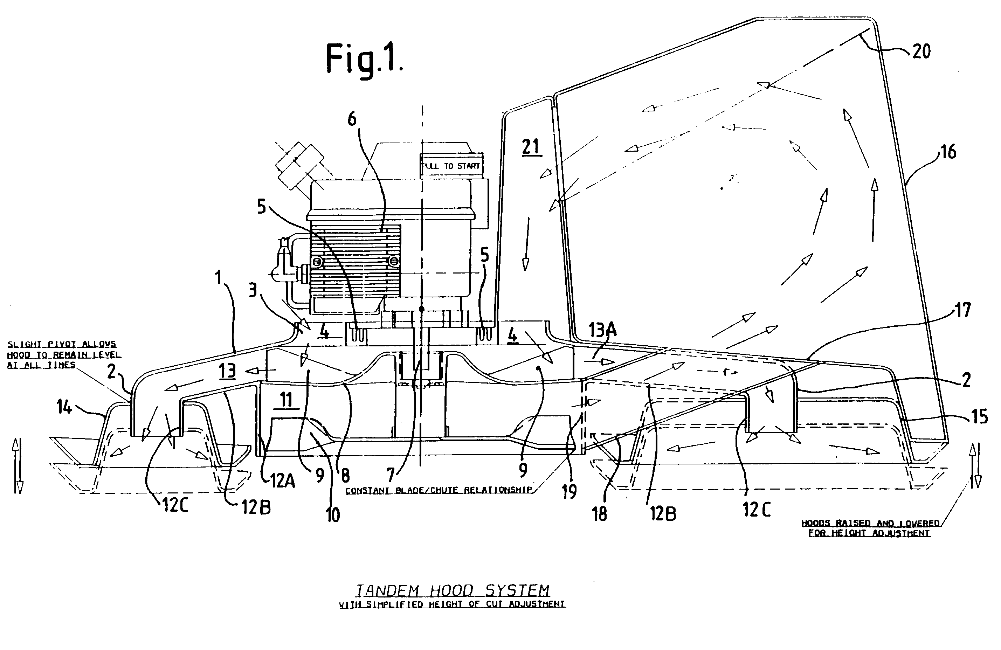

Referring to the drawings, Figure 1 shows a mower having a main body 1 with a downwardly-directed peripheral flange 2. The main body 1 has an air inlet hole 3 which is divided into a number of individual air inlet apertures by a number of radial spokes 4 and a central annular boss 5. A power unit 6, which may be an electric motor or an internal combustion engine, is mounted on the central boss 5, and carries an impeller 8 having blades 9. A cutting blade 10 is also mounted on the output shaft 7.

The cutting blade 10 is rotatable within a cutting chamber 11 which is defined by a secondary body 12 supported in the main body 1. The secondary body 12 has an inner peripheral wall 12A, a slightly downwardly-inclined wall 12B extending outwardly from the wall 13A, and an outer peripheral wall 12C. The main body 1 and the secondary body 12 form air passages 13 and 13A (see Figure 1) which lead air in at least fore and aft directions into a fore hood 14 and an aft hood 15 respectively.

In Figure 1, the fore and aft hoods 14 and 15 are shown in raised (full line) and lowered (dotted line) positions, and means (not shown) are included for varying the vertical positions of the hoods, independently or in synchronism with each other. Although specific reference has been made to fore and aft hoods 14 and 15, side hoods may also be included.

A grass collector 16 is supported on the main body 1, the collector including an inlet 17 which opens into a delivery chute 18 which forms part of the secondary body 12. The delivery chute 18 opens into the cutting chamber 11 via an aperture 19.

The grass collector 16 has a filter 20 for filtering grass from exiting air which is returned to the impeller 8 via a duct 21. The path of air from atmosphere via the impeller 8, and the passages 13 and 13A, into the hoods 14 and 15, as well as the path of cut grass is shown by a series of open headed arrows.

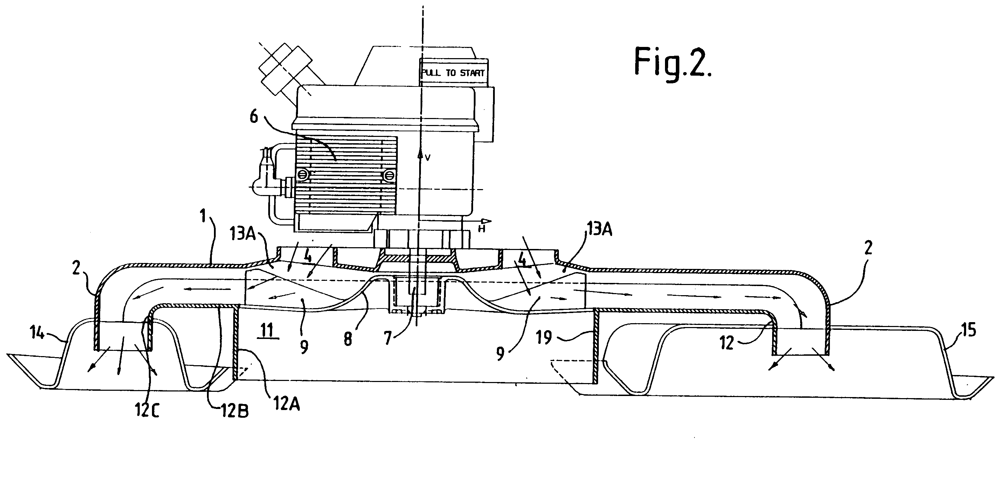

Figure 2 shows a modified form of mower, in which the same reference numerals are used for the same components as in Figure 1. The essential difference between the mowers of Figures 1 and 2 is that the Figure 2 mower does not include any grass collection facility.

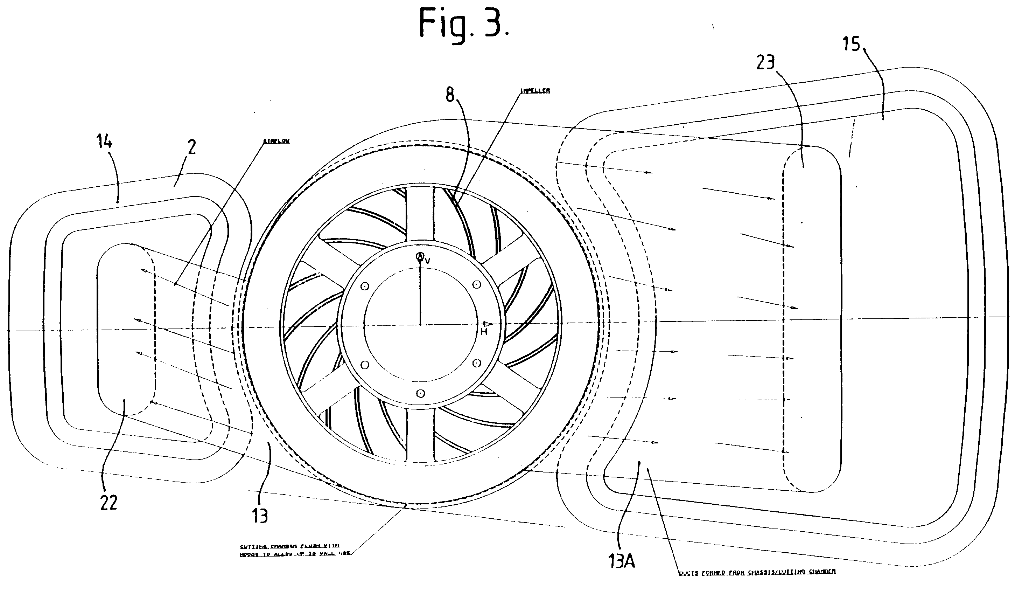

As shown in Figure 3, the passages 13 and 13A extend from the peripheral region of the impeller 8 to support the fore and aft hoods 14 and 15 respectively, and pressure air enters the hoods through elongate inlets 22 and 23.

The cutting chamber 11 is specifically designed so that its generally cylindrical section which houses the cutting blade 10 is in close proximity to the base of the impeller 8, so that air exhausted from the impeller does not enter the cutting chamber, but follows the direction of the passages 13 and 13A as previously described.

The purpose of the hoods 14 and 15 is to contain the air delivered through the passages 13 and 13A, thereby creating the positive pressure to lift the mower and cause it to hover. The fixation of the hoods 14 and 15 is important, and can bring many advantages:
i) A fixing which allows vertical hood movement between several fixed positions, allows the height of the cutting blade 10 relative to the ground to be altered, giving various lengths of cut grass.
ii) When the fixing allows slight pivoting, and is positioned in line with the centre of the hood area, this ensures that, regardless of the weight distribution on the main body 1, the tandem hoods 14 and 15 remain parallel to the ground. This is an important feature, because it reduces air loss from the hoods 14 and 15 due to poor balance, and reduces friction at rear of each hood due to drag.
iii) The cutting blade 10 is fixed to the output shaft 7, and rotates in unison with the power unit 6 and the impeller 8 to facilitate grass cutting. The blade 10 is designed to lift the grass prior to cutting; and, having cut the grass, to project it through the chute 18 leading from the cutting chamber 11 to the grass collector 16.

An important aspect of the grass collection system is the fact that the air which carries the clippings into the collector 16 is passed through the filter screen 20, and is then directed into the impeller 8 to be re-circulated as hover air. This system has distinct advantages:
i) Air and debris are not exhausted from the collector 16 into the operator zone.
ii) Grass collection is improved by the suction effect of the impeller 8 which complements the air movement from the blade 10.
iii) Grass in the collector 16 is compacted better, giving a potential to collect more grass.

The fore and aft hoods 14 and 15 may be detachably secured to the main body 1 and/or their respective passages 13, 13A in any manner known to engineers, for example by tubular couplings. Such detachability is of value when servicing or cleaning the mower. In addition, where a striped effect is designed on a cut lawn, the aft hood 15 may be provided with a roller. The roller may be mounted between rearwardly-extending flanges moulded integrally, or otherwise secured to, the main body 1.

## Claims

1. A rotary hover mower comprising a main body (1), a power source (6) supported on the main body, an impeller (8) for creating pressure air, and a cutting member (10), the impeller and the cutting member each being drivingly connected to the power source, characterised in that at least two hoods (14 and 15) are directly or indirectly carried by the main body, each hood opening downwardly towards ground datum, and in that passageway means (13, 13A) are provided for transmitting pressure air from the impeller to each hood, whereby pressure air issuing from each hood serves to support the mower above ground datum.

2. A mower according to claim 1, further comprising a secondary body (12) disposed within the main body (1), the passageway means (13, 13A) being formed between the main body and the secondary body.

3. A mower according to claim 1 or claim 2, wherein the secondary body (12) includes an annular peripheral wall (12C) defining a cutting chamber in which the cutting member (10) is rotatably mounted.

4. A mower according to claim 3, wherein the impeller (8) extends substantially across the annular peripheral wall (12C) for directing pressure air directly into the passageway means (13, 13A).

5. A mower according to any one of claims 1 to 4, wherein the impeller (8) and the cutting member (10) are coaxially mounted.

6. A mower according to any one of claims 1 to 5, wherein one hood (14 or 15) is disposed forwardly, and the other (15 or 14) rearwardly, of the main body (1) when considered in the normal direction of use.

7. A mower according to any one of claims 1 to 6, further comprising means for adjusting the position of each hood (14, 15) relative to the main body (1).

## Patentansprüche

1. Luftkissen-Kreiselmäher mit einem Hauptkörper (1), einer Energiequelle (6), die an dem Hauptkörper angebracht ist, einem Windrad (8) zum Erzeugen von Druckluft und einem Schneideelement (10), wobei das Windrad und das Schneideelement jeweils antriebsmäßig mit der Energiequelle verbunden sind, dadurch gekennzeichnet, daß zumindest zwei Hauben (14 und 15) direkt oder indirekt von dem Hauptkörper getragen sind, wobei jede Haube sich nach unten zur Bodenlage hin sich öffnet, und daß eine Passageeinrichtung (13, 13A) zum Übertragen von Druckluft von dem Windrad zu jeder Haube vorgesehen ist, wodurch Druckluft, welche von jeder Haube stammt zum Haltern des Mähers oberhalb der Bodenlage dient.

2. Mäher nach Anspruch 1, gekennzeichnet durch einen sekundären Körper (12), welcher innerhalb des Hauptkörpers (1) angebracht ist, wobei die Passageeinrichtung (13, 13A) zwischen dem Hauptkörper und dem sekundären Körper gebildet ist.

3. Mäher nach Anspruch 1 oder 2, dadurch gekennzeichnet, daß der sekundäre Körper (12) eine ringförmige peripherische Wand (12C) enthält, welche eine Schneidekammer definiert, in der das Schneideelement (10) drehbar angebracht ist.

4. Mäher nach Anspruch 3, dadurch gekennzeichnet, daß das Windrad (8) im wesentlichen über die ringförmige peripherische Wand (12C) zum direkten Richten von Druckluft in die Passageeinrichtung ((13, 13A) verläuft.

5. Mäher nach einem der Ansprüche 1 bis 4, dadurch gekennzeichnet, daß der Windflügel (8) und das Schneideelement (10) koachsial angebracht sind.

6. Mäher nach einem der Ansprüche 1 bis 5, dadurch gekennzeichnet, daß eine Haube (14 oder 15) nach vorne und die andere (15 oder 14) nach hinten bezüglich des Hauptkörpers (1) angebracht ist, wenn in der normalen Benutzungsrichtung betrachtet.

7. Mäher nach einem der Ansprüche 1 bis 6, gekennzeichnet durch eine Einrichtung zum Einstellen der Position der jeweiligen Haube (14, 15) relativ zum Hauptkörper (1).

## Revendications

1. Tondeuse rotative à coussin d'air comprenant un corps principal (1), une source d'énergie (6) portée par le corps principal, une roue hélice (8) pour produire de l'air sous pression, et un élément de coupe (10), la roue hélice et l'élément de coupe étant chacun relié en entraînement à la source d'énergie, caractérisée en ce qu'au moins deux hottes (14 et 15) sont portées, directement ou indirectement, par le corps principal, chaque hotte s'ouvrant vers le bas en direction du niveau du sol, et en ce que des moyens formant passages (13, 13A) sont prévus pour transmettre à chaque hotte de l'air sous pression provenant de la roue hélice, l'air sous pression sortant de chaque hotte pour servir à soutenir la tondeuse au-dessus du niveau du sol.

2. Tondeuse selon la revendication 1, comprenant en outre un corps secondaire (12) disposé à l'intérieur du corps principal (1), les moyens formant passages (13, 13A) étant ménagés entre le corps principal et le corps secondaire.

3. Tondeuse selon la revendication 1 ou 2, dans laquelle le corps secondaire (12) comprend une paroi périphérique annulaire (12C) définissant une chambre de coupe dans laquelle est monté, de manière à pouvoir tourner, l'élément de coupe (10).

4. Tondeuse selon la revendication 3, dans laquelle la roue hélice (8) s'étend sensiblement en travers de la totalité de la paroi périphérique annulaire (12C) pour diriger l'air sous pression directement dans les moyens formant passages (13, 13A).

5. Tondeuse selon l'une quelconque des revendications 1 à 4, dans laquelle la roue hélice (8) et l'élément de coupe (10) sont montés de manière coaxiale.

6. Tondeuse selon l'une quelconque des revendications 1 à 5, dans laquelle une hotte (14 ou 15) est placée à l'avant et l'autre (15 ou 14) à l'arrière du corps principal (1) si l'on considère la direction normale d'utilisation.

7. Tondeuse selon l'une quelconque des revendications 1 à 6, comprenant en outre des moyens pour le réglage de la position de chaque hotte (14, 15) par rapport au corps principal (1).
